# EUROPÄISCHE PATENTANMELDUNG

(11) **EP 2 578 180 A1**
(43) Veröffentlichungstag der Anmeldung: **10.04.2013**
(21) Anmeldenummer: 12006225.2
(22) Anmeldetag: 03.09.2012
(51) Int. Cl.: A61C 3/02

(54) **Dentalwerkzeug sowie Verfahren zu dessen Herstellung**

(30) Priorität: 05.10.2011 DE 102011114903
(71) Anmelder: Gebr. Brasseler GmbH & Co. KG, 32657 Lemgo (DE)
(72) Erfinder: Schön, Jürgen, 32689 Kalletal (DE)
(74) Vertreter: Hoefer & Partner

(57) **Zusammenfassung**

Die Erfindung bezieht sich auf ein Dentalwerkzeug mit einem Arbeitsbereich 1, welcher mit abrasiven Partikeln 2 belegt ist, wobei die abrasiven Partikel 2 zumindest zum Teil in eine galvanisch auf der Oberfläche des Arbeitsbereichs 1 ausgebildete Trägerschicht 3 eingebettet sind und wobei auf der Trägerschicht 3 zumindest eine, die abrasiven Partikel 2 zumindest teilweise umschließende Deckschicht 4 angeordnet ist, sowie auf ein Verfahren zur Herstellung des Dentalwerkzeugs.

## Beschreibung

Die Erfindung bezieht sich auf ein Dentalwerkzeug mit einem Arbeitsbereich, welcher mit abrasiven Partikeln belegt ist. Ein derartiges Dentalwerkzeug ist beispielsweise aus der DE 198 25 527 A1 vorbekannt.

Weiterhin bezieht sich die Erfindung auf ein Verfahren zur Herstellung des Dentalwerks.

Die abrasiven Partikel, meist Diamantpartikel, werden dem Stand der Technik entsprechend galvanisch abgeschieden. Dabei wird der vorbereitete Arbeitsbereich, der meist aus einem metallischen Material besteht, in einem Galvanikbad angeordnet, in welchem eine Mischung aus abrasiven Partikeln und dem für die galvanische Abscheidung benötigten Fluid angeordnet ist.

Üblicherweise werden derartige Dentalwerkzeuge, welche meist als Schleifinstrumente eingesetzt werden, mit einer galvanisch abgeschiedenen Nickelschicht belegt, welche die abrasiven Partikel teilweise umschließt und an dem Arbeitsbereich verankert.

Das Dentalwerkzeug kann in unterschiedlichster Weise ausgebildet sein, üblicherweise handelt es sich um ein rotierendes Instrument mit einem in einer Antriebsvorrichtung einspannbaren Schaft, an dessen freien Ende ein Arbeitskopf angeordnet ist, der den Arbeitsbereich bildet. Es ist jedoch auch möglich, mit dieser Technologie nichtrotierende Dentalwerkzeuge herzustellen.

Der Nachteil der üblichen Vorgehensweise besteht darin, dass die Nickel-Schichten bei einem Patienten allergische Reaktionen auslösen können. Aus diesem Grunde ist es wünschenswert, ein Dentalwerkzeug zu erzeugen, welches so ausgebildet ist, dass der Patient nicht mit Nickelwerkstoffen in Berührung kommt und somit keine Allergiegefahr besteht.

In der DE 198 25 527 A1 wurde ein Dentalinstrument beschrieben, bei welchem sowohl der Trägerkörper aus einem nickelfreien Werkstoff gefertigt ist und auch das Befestigungsmaterial für die abrasiven Partikel kein Nickel enthält. Eine derartige Ausgestaltung ist nicht für alle Anwendungszwecke einsetzbar, beispielsweise aus Gründen der Materialfestigkeit oder auch aus Kostengründen.

Weiterhin ist es aus dem Stand der Technik bekannt, die abrasiven Partikel bei Schleifwerkzeugen mittels einer Lötbindung zu fixieren. Auch hierbei erweist es sich als nachteilig, dass die Lotmaterialien Nickel beinhalten.

Der Erfindung liegt die Aufgabe zugrunde, ein Dentalwerkzeug der eingangs genannten Art zu schaffen, sowie ein Verfahren zu dessen Herstellung, welche bei einfachem Aufbau und einfacher, kostengünstiger Herstellbarkeit ein hohes Maß an Betriebssicherheit aufweisen und die Gefahr von Nickelallergien ausschließen.

Erfindungsgemäß wird die Aufgabe durch die Merkmalskombinationen der unabhängigen Ansprüche gelöst, die Unteransprüche zeigen weitere vorteilhafte Ausgestaltungen der Erfindung.

Erfindungsgemäß ist somit vorgesehen, dass die abrasiven Partikel zumindest zum Teil in eine galvanisch auf der Oberfläche des Arbeitsbereichs ausgebildete Trägerschicht eingebettet sind und dass auf der Trägerschicht zumindest eine, die abrasiven Partikel zumindest teilweise umschließende Deckschicht angeordnet ist.

Erfindungsgemäß ist somit ein mehrschichtiger Aufbau geschaffen worden, der mehrere Schichten auf dem Arbeitsbereich des Dentalwerkzeugs vorsieht. Die Trägerschicht fixiert und hält die galvanischen Partikel, insbesondere während des Herstellungsverfahrens. Sie wird deshalb als Trägerschicht bezeichnet, da sie die abrasiven Partikel bei deren galvanischer Abscheidung zunächst hält und verankert. Es ist somit, wie aus dem Stand der Technik bekannt, möglich, eine gleichmäßige und funktionelle Aufbringung der abrasiven Partikel, beispielsweise Diamantpartikel, zu erzielen.

Erfindungsgemäß ist als zweite Schicht eine Deckschicht vorgesehen, welche die Trägerschicht vollständig abdeckt und deshalb als Deckschicht bezeichnet wird. Die Deckschicht kann eine größere Dicke aufweisen als die Trägerschicht, insbesondere deshalb, weil sie die abrasiven Partikel verankert und fixiert. Die Deckschicht erfüllt somit eine zusätzliche Funktion, nämlich die Bindung und endgültige Halterung der abrasiven Partikel.

Erfindungsgemäß ist somit ein Dentalwerkzeug geschaffen, bei welchem zum einen die abrasiven Partikel sicher an dem Arbeitsbereich gehaltert und fixiert sind und bei welchem andererseits ein Kontakt des Patienten mit der Trägerschicht sicher vermieden wird.

Erfindungsgemäß kann die Trägerschicht somit, da diese von der Deckschicht vollständig umschlossen ist, auch aus einem nickelhaltigen Material gefertigt werden, ohne dass eine Gefahr für den Patienten besteht.

Die Erfindung bezieht sich auch auf ein Verfahren zur Herstellung eines Dentalwerkzeugs mit einem Schaft und einem an diesem befestigten Arbeitsbereich, wobei der Arbeitsbereich zumindest zum Teil mit abrasiven Partikeln belegt ist. Das erfindungsgemäße Verfahren umfasst die nachfolgenden Arbeitsschritte, welche bevorzugt in der angegebenen Reihenfolge durchgeführt werden, wobei einige der Arbeitsschritte wahlweise ausgeführt werden können.

Bevorzugterweise wird zunächst ein Rohling des Dentalwerkzeugs, insbesondere des Arbeitsbereichs erzeugt, beispielsweise mittels eines Dreh- oder Schleifverfahrens. Es erfolgt dann eine Aktivierung der Rohlingsoberfläche für eine nachfolgende galvanische Beschichtung. Diese Aktivierung erfolgt bevorzugterweise durch Strahlen, Ätzen und/oder elektrolytisches Abtragen. Dies erfolgt insbesondere, um eine Entfettung der Oberfläche vorzunehmen und/oder die Haftvermittlung zu verbessern.

Nachfolgend erfolgt zunächst ein Anheften der abrasiven Partikel, welche üblicherweise in Form von Diamantkörnern ausgebildet sind. Das Anheften erfolgt durch Ausbildung einer Trägerschicht. Dieser Vorgang wird als galvanische Beschichtung aus einem Nickelsulfat- oder Nickelsulfamat-Elektrolyten gebildet. Bevorzugterweise wird ein Nickelsulfatelektrolyt verwendet. Die Elektrolyttemperatur beträgt dabei bevorzugterweise 40°C bis 65°C. Eine Temperatur von 55°C ist besonders bevorzugt. Die Stromdichte beträgt zwischen 0,5 A/dm² und 5 A/dm², bevorzugterweise 2 A/dm². Die für die Anheftung der abrasiven Partikel (insbesondere Diamantkörner) benötigte Zeit ist dabei abhängig von der Korngröße der abrasiven Partikel. Die Korngröße wird als durchschnittlicher Durchmesser der einzelnen abrasiven Partikel definiert. Da die Dicke der Trägerschicht in Abhängigkeit von der Korngröße der abrasiven Partikel bestimmt wird, ist es offensichtlich, dass die zur galvanischen Anheftung benötigte Zeit von der Korngröße abhängt. Erfindungsgemäß wird die Dicke der Trägerschicht so gewählt, dass sie zwischen 20 % und 30 % der Korngröße (des durchschnittlichen Durchmessers der abrasiven Partikel) beträgt. Ein Wert von 25 % ist besonders vorteilhaft.

Durch die erfindungsgemäß beschriebene Vorgehensweise ist sichergestellt, dass die abrasiven Partikel durch die Trägerschicht fest auf dem Arbeitsbereich verankert sind.

Während des Anheftens der abrasiven Partikel werden diese erfindungsgemäß in geeigneter Weise bereitgestellt. Dies kann beispielsweise durch Aufstreuen erfolgen, es ist jedoch auch möglich, den Rohling in eine Diamantpackung einzugraben oder die Diamanten (abrasive Partikel) in der Elektrolytlösung zu dispergieren, vorzugsweise durch Eingraben. Hierdurch wird sichergestellt, dass bei der elektrolytischen Abscheidung der Trägerschicht eine ausreichende Anzahl an abrasiven Partikeln (Diamanten) angeheftet werden kann.

Nachfolgend erfolgt erfindungsgemäß die Ausbildung der Deckschicht. Diese ist bevorzugterweise aus einem schwermetallfreien Material gefertigt, beispielsweise aus Kunststoff, Keramik oder einem biokompatiblen Metall, beispielsweise Titan. Die Deckschicht kann erfindungsgemäß durch Spritzen, Tauchen, Pulverbeschichten, Laseraufschmelzen und/oder Flammspritzen aufgebracht werden.

Bei dem zu fertigenden Dentalwerkzeug ist erfindungsgemäß die Gesamtschichtdicke, welche die Summe der Trägerschicht und der Deckschicht darstellt, abhängig von der Korngröße der abrasiven Partikel. Sie beträgt bevorzugterweise zwischen 40 % und 80 % der Korngröße der abrasiven Partikel, wobei bevorzugterweise von der durchschnittlichen Korngröße ausgegangen wird. Ein Wert von 65 % ist für die Gesamtschichtdicke besonders bevorzugt.

Die Dicke der Deckschicht wird erfindungsgemäß entweder so erzeugt, dass ein gezielter Auftrag der Deckschicht bis zu der gewünschten Dicke erfolgt. In einer alternativen Ausgestaltung der Erfindung ist es auch möglich, die Deckschicht dicker aufzutragen und somit die Kornzwischenräume zwischen den abrasiven Partikeln vollständig auszufüllen oder zu überfüllen. Dies kann bis zu einem Niveau der Kornspitzen der abrasiven Partikel erfolgen. Anschließend erfolgt dann erfindungsgemäß ein Abtragen der zu viel aufgebrachten Dicke der Deckschicht bis zu vorzugsweise 65 % der Korngröße der abrasiven Partikel, wobei die 65 % sich auf die oben genannte Gesamtschichtdicke beziehen. Das Abtragen kann mechanisch erfolgen, beispielsweise durch Bürsten, Strahlen oder durch chemische oder durch physikalische Verfahren, beispielsweise durch Ätzen, elektrochemischen Abtrag, Laserschmelzen, chemisches Auswaschen und/oder photochemischen Abtrag.

Nachfolgend werden nochmals einige vorteilhafte Aspekte der Erfindung diskutiert, wobei auf die oben stehende Beschreibung der Verfahrensschritte Bezug genommen wird.

Erfindungsgemäß kann somit die Deckschicht aus zumindest einem Kunststoffmaterial oder aus zumindest einem metallischen Material oder aus zumindest einem nicht-metallischen Material oder aus zumindest einem keramischen Material gefertigt werden. Es ist erfindungsgemäß auch möglich, die Deckschicht mehrschichtig auszubilden, um zum einen die Verankerung der abrasiven Partikel zu verbessern und um zum anderen das Verschleißverhalten zu optimieren.

Insbesondere die Aufbringung einer aus einem Kunststoffmaterial gefertigten Deckschicht erweist sich als besonders vorteilhaft, da eine derartige Kunststoffschicht farbig ausgestaltet werden kann. Hierdurch ist es möglich, das Dentalwerkzeug zu kennzeichnen, so dass auf weitere aufwändige Kennzeichnungsmittel, beispielsweise Farbringe oder Laserbeschriftungen, verzichtet werden kann. Auch eine mehrschichtige Ausbildung der Deckschicht, beispielsweise aus mehreren Kunststoffmaterialien oder auch aus mehreren anderen Materialien in geeigneter Kombination ist besonders vorteilhaft, da durch den Verschleiß der jeweils äußeren Schicht und die sich ergebende Farbänderung (bei Verwendung unterschiedlich farbiger Schichten) der Anwender einen Hinweis auf den Verschleißzustand erhalten kann.

Erfindungsgemäß kann, wie erwähnt, die Deckschicht bei Verwendung eines Kunststoffmaterials beispielsweise durch ein Pulverbeschichtungsverfahren oder ein Pulverlackierungsverfahren aufgebracht werden. Dabei können übliche Pulverlacke verwendet werden, welche aus trockenen, körnigen Partikeln bestehen, die zwischen 1 und 100 µm groß sind. Dabei ist es insbesondere möglich, Kunststoffe zu verwenden, die im Bereich der Medizin zugelassen und verwendbar sind, beispielsweise PEEK. Das Pulver wird beispielsweise elektrostatisch appliziert. Durch geeignete Ausgestaltung der elektrischen Felder ist es möglich, eine unerwünschte Ablagerung auf den abrasiven Partikeln zu vermeiden, so dass die Ausbildung der Deckschicht auf der Trägerschicht in optimaler Weise erfolgen kann.

In einer alternativen Ausgestaltung der Erfindung ist es auch möglich, die Deckschicht mittels eines PVD-Verfahrens (physikalische Gasphasenabscheidung) aufzubringen. Dabei wird das Material durch den Beschuss mit Laserstrahlen, magnetisch abgelenkten Ionen oder Elektronen verdampft und beispielsweise durch elektrische Felder unter Unterdruck der Trägerschicht zugeführt, um sich dort abzulagern. Mit derartigen PVD-Verfahren können sehr niedrige Prozesstemperaturen verwirklicht werden, so dass selbst niedrigschmelzende Kunststoffe beschichtet beziehungsweise verarbeitet werden können.

Erfindungsgemäß ist es auch möglich, die Deckschicht durch andere Verfahrensschritte, beispielsweise durch einen Tauchvorgang, aufzubringen. Die Dicke der Deckschicht kann dabei beispielsweise anschließendes Behandeln mit einer Bürste oder durch Schleudern exakt eingestellt werden.

Erfindungsgemäß ist es besonders günstig, wenn die abrasiven Partikel (Diamantpartikel, Schleifkörner) bis zu 2/3 des Schleifkornes beziehungsweise ihrer Dicke eingebettet sind. Da die Deckschicht den eigentlichen Bindungsvorgang realisiert, ist es günstig, wenn die Partikel bis zu 2/3 ihrer Dicke in der Deckschicht eingebettet sind, es ist jedoch auch möglich, diese bis zu 2/3 ihrer Dicke in der Deckschicht und in der Trägerschicht anzuordnen. Die Trägerschicht dient, wie beschrieben, im Wesentlichen nur zur Fixierung der abrasiven Partikel und weist somit eine im Vergleich zur Deckschicht geringe Dicke auf. Die Partikel können beispielsweise eine Korngröße von 100 µm aufweisen, bei einer Dicke der Schichten von 65 µm. Daher können die Partikel beispielsweise zu 1/3 ihrer Einbett-Tiefe in der Trägerschicht und zu 2/3 ihrer Einbett-Tiefe in der Deckschicht aufgenommen sein.

Alternativ zu der oben beschriebenen Möglichkeit der Aufbringung der Deckschicht ergeben sich erfindungsgemäß weitere Varianten, beispielsweise ist es auch möglich, die Deckschicht mittels eines CVD-Verfahrens (chemische Gasphasenabscheidung) aufzubringen.

Die Deckschicht kann, wie erwähnt, aus unterschiedlichen Materialien bestehen, welche zum einen eine chemische Isolierung der unter der Deckschicht liegenden Trägerschicht sicherstellen und zum anderen eine ausreichende Verankerung und Bindung der abrasiven Partikel bewirken. Auch ist es, wie erwähnt, möglich, unterschiedlichste Materialien in einer mehrschichtig aufgebauten Deckschicht zu verwenden.

Das erfindungsgemäße Dentalwerkzeug kann beispielsweise als Schleifer ausgestaltet sein. Dabei ist es möglich, dieses für den Einmaleinsatz in steriler Verpackung anzubieten, so dass nicht die Gefahr besteht, dass durch Abnutzung der Deckschicht der Patient in Kontakt mit der nickelhaltigen Trägerschicht kommt. Abhängig von dem Anwendungszweck, der Ausgestaltung des Dentalwerkzeugs sowie der Materialwahl für die Deckschicht ist es jedoch auch möglich, ein mehrfach verwendetes Dentalwerkzeug zu schaffen.

Im Folgenden wird die Erfindung anhand eines Ausführungsbeispiels in Verbindung mit der Zeichnung beschrieben. Dabei zeigt:
- Fig. 1: eine schematische Darstellung eines Ausführungsbeispiels eines erfindungsgemäßen Dentalwerkzeugs in einem ersten Fertigungsschritt,
- Fig. 2: eine Darstellung gemäß Fig. 1 im fertiggestellten Zustand, und
- Fig. 3: eine vergrößerte Darstellung gemäß Fig. 2.

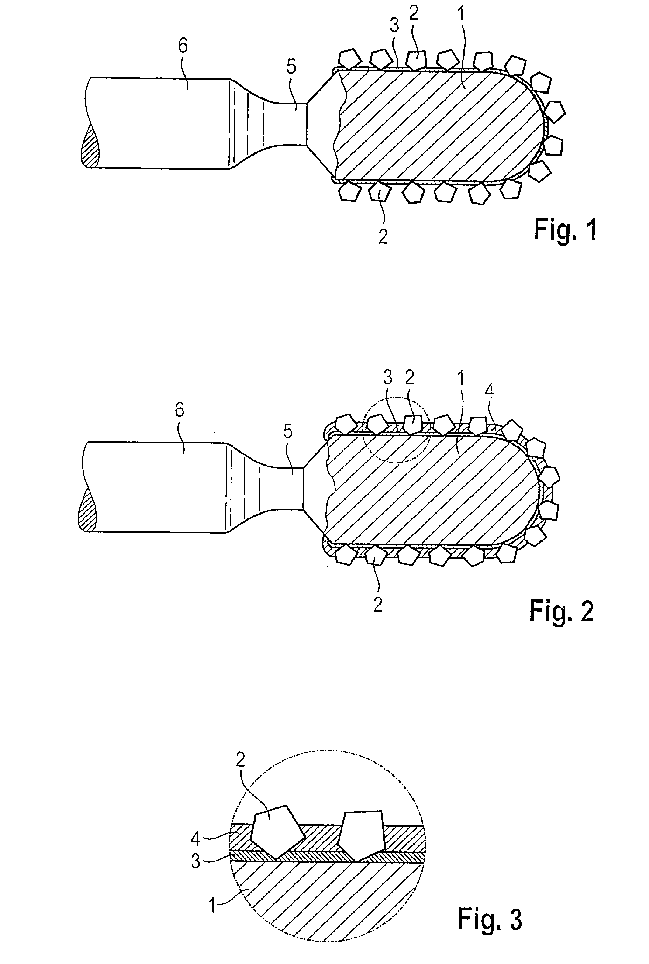

Das in den Fig. 1 und 2 dargestellte Dentalwerkzeug umfasst einen Arbeitsbereich 1, welcher schematisch in einer Schnittansicht gezeigt ist. Der Arbeitsbereich 1 ist über einen Hals 5 mit einem Schaft 6 versehen, welcher in einen rotierenden Antrieb einspannbar ist, so wie dies aus dem Stand der Technik bekannt ist.

In einem ersten Fertigungsschritt wird auf den mechanisch vorbearbeiteten Grundkörper des Dentalwerkzeugs eine Trägerschicht 3 mittels eines galvanischen Verfahrens aufgebracht. Durch dieses galvanische Verfahren wird zugleich mit der Trägerschicht 3 eine Beschichtung mit abrasiven Partikeln 2 vorgenommen, so wie dies aus dem Stand der Technik bekannt ist. Wie die Fig. 1 zeigt, ist die Trägerschicht 3 bei dem erfindungsgemäßen Dentalwerkzeug sehr dünn ausgebildet und ihre Dicke ist so bemessen, dass sie die abrasiven Partikel 2 lediglich fixiert, damit diese für den nachfolgenden Herstellungsvorgang zur Verfügung stehen.

Die Fig. 2 zeigt das fertiggestellte Dentalwerkzeug, bei welchem, ausgehend von dem in Fig. 1 gezeigten Zustand, auf die Trägerschicht 3 eine Deckschicht 4 aufgebracht ist, welche wesentlich dicker ist als die Trägerschicht 3 und welche die abrasiven Partikel 2 bindet und verankert. Die abrasiven Partikel 2 sind dabei beispielsweise bis zu 2/3 ihrer Dicke in die Deckschicht 4 eingebettet. Weiterhin zeigt die Fig. 2, dass die Deckschicht 4 die Trägerschicht 3 vollständig umschließt und somit chemisch isoliert. Die Fig. 3 zeigt eine vergrößerte Detailansicht.

### Bezugszeichenliste

- 1: Arbeitsbereich
- 2: abrasive Partikel
- 3: Trägerschicht
- 4: Deckschicht
- 5: Hals
- 6: Schaft

## Patentansprüche

1. Dentalwerkzeug mit einem Arbeitsbereich (1), welcher mit abrasiven Partikeln (2) belegt ist, wobei die abrasiven Partikel (2) zumindest zum Teil in eine galvanisch auf der Oberfläche des Arbeitsbereichs (1) ausgebildete Trägerschicht (3) eingebettet sind und wobei auf der Trägerschicht (3) zumindest eine, die abrasiven Partikel (2) zumindest teilweise umschließende Deckschicht (4) angeordnet ist.

2. Dentalwerkzeug nach Anspruch 1, **dadurch gekennzeichnet, dass** die Deckschicht (4) aus zumindest einem Kunststoffmaterial oder aus zumindest einem metallischen Material oder aus zumindest einem nicht-metallischen Material oder aus zumindest einem keramischen Material gefertigt ist.

3. Dentalwerkzeug nach Anspruch 1 oder 2, **dadurch gekennzeichnet, dass** die Trägerschicht (3) die abrasiven Partikel (2) während eines ersten Fertigungsschrittes vorfixiert, während die abrasiven Partikel (2) mittels der Trägerschicht (3) an dem Arbeitsbereich verankert sind.

4. Dentalwerkzeug nach einem der Ansprüche 1 bis 3, **dadurch gekennzeichnet, dass** die abrasiven Partikel (2) im Wesentlichen bis zu 2/3 ihrer Dicke in der Trägerschicht (3) und in der Deckschicht (4) angeordnet sind.

5. Dentalwerkzeug nach einem der Ansprüche 1 bis 4, **dadurch gekennzeichnet, dass** die Deckschicht (4) farbig ausgebildet ist.

6. Dentalwerkzeug nach einem der Ansprüche 1 bis 5, **dadurch gekennzeichnet, dass** die Deckschicht (4) durch Aufbringen einer flüssigen oder pulverförmigen Masse hergestellt ist, insbesondere durch Sprühen, Tauchen, Pulverbeschichten oder durch ein PVD-Verfahren oder eine CVD-Verfahren.

7. Dentalwerkzeug nach einem der Ansprüche 1 bis 6, **dadurch gekennzeichnet, dass** die Deckschicht (4) chemisch isolierend die gesamte Trägerschicht (3) abdeckt.

8. Dentalwerkzeug nach einem der Ansprüche 1 bis 7, **dadurch gekennzeichnet, dass** die Trägerschicht (3) die abrasiven Partikel (2) während eines ersten Fertigungsschrittes vorfixiert, während die abrasiven Partikel (2) mittels der Deckschicht (4) an dem Arbeitsbereich verankert sind, wobei die abrasiven Partikel (2) im Wesentlichen zu 2/3 ihrer Dicke in der Deckschicht (4) eingebettet sind und wobei die Deckschicht (4) chemisch isolierend die gesamte Trägerschicht (3) abdeckt.

9. Verfahren zur Herstellung eines mit abrasiven Partikeln (2) belegten Arbeitsbereichs (1) eines Dentalwerkzeugs,
wobei ein metallischer Rohling des Arbeitsbereichs (1) hergestellt wird,
wobei nachfolgend eine Trägerschicht (3) durch eine galvanische Beschichtung in einem Nickelsulfat- oder Nickelsulfamat-Elektrolyten bei einer Elektrolyttemperatur zwischen 40°C und 65°C, vorzugsweise 55°C, bei einer Stromdichte von 0,5 A/dm² bis 5 A/dm², vorzugsweise 2 A/dm², erfolgt,
wobei die abrasiven Partikel während des Anheftens durch Aufstreuen, Eingraben oder Dispergieren auf dem Arbeitsbereich (1) aufgebracht werden, wobei nachfolgend eine Deckschicht (4) aufgebracht wird.

10. Verfahren nach Anspruch 9, **dadurch gekennzeichnet, dass** die Trägerschicht (3) mit einer Dicke von 20 % bis 30 % des Durchmessers der abrasiven Partikel, vorzugsweise 25 % des Durchmessers der abrasiven Partikel, hergestellt wird.

11. Verfahren nach Anspruch 9 oder 10, **dadurch gekennzeichnet, dass** die Trägerschicht (3) und die Deckschicht (4) zusammen mit einer Dicke von 40 % bis 80 % des Durchmessers der abrasiven Partikel, vorzugsweise 65 % des Durchmessers der abrasiven Partikel, hergestellt werden.

12. Verfahren nach einem der Ansprüche 9 bis 11, **dadurch gekennzeichnet, dass** die Deckschicht (4) in einem Arbeitsschritt bis zu der gewählten Dicke aufgebracht wird.

13. Verfahren nach einem der Ansprüche 9 bis 11, **dadurch gekennzeichnet, dass** die Deckschicht (4) durch eine Überfüllung der Zwischenräume der abrasiven Partikel bis zum Niveau der Kornspitzen der abrasiven Partikel aufgebracht wird und anschließend bis auf vorzugsweise 65 % des Durchmessers der abrasiven Partikel abgetragen wird, wobei das Abtragen durch Bürsten, Strahlen, Ätzen, elektrochemisches Abtragen, Laserschmelzen, chemisches Auswaschen und/oder photochemischen Abtrag erfolgt.

14. Verfahren nach einem der Ansprüche 9 bis 13, **dadurch gekennzeichnet, dass** der Rohling vor der Aufbringung der Trägerschicht (3) gestrahlt, geätzt und/oder elektrolytisch vorbehandelt und/oder entfettet wird.

15. Verfahren nach einem der Ansprüche 9 bis 14, **dadurch gekennzeichnet, dass** die Deckschicht (4) aus einem schwermetallfreien Material, insbesondere aus Kunststoff, Keramik, biokompatiblen Material, insbesondere Titan und/oder Kunststoff, insbesondere durch Spritzen, Tauchen, Pulverbeschichten, Laseraufschmelzen und/oder Flammspritzen hergestellt wird.
